# EUROPEAN PATENT SPECIFICATION

(11) **EP 3 922 990 B1**
(45) Date of publication and mention of the grant of the patent: **08.05.2024**
(21) Application number: 21461528.8
(22) Date of filing: 28.03.2021
(51) Int. Cl.: G01N 30/60, G01N 30/88, G01N 30/72, F16L 19/07

(54) **SYSTEM FOR AUTOMATIC CHANGING AND SEALING OF DISPOSABLE CHROMATOGRAPHIC COLUMNS IN HIGH-PERFORMANCE LIQUID CHROMATOGRAPHY; MEASUREMENT METHOD AND ITS APPLICATION IN THE ANALYSIS OF BIOMARKER OF RARE DISEASE**
SYSTEM ZUM AUTOMATISCHEN WECHSELN UND ABDICHTEN VON WEGWERFBAREN CHROMATOGRAFIESÄULEN IN DER HOCHLEISTUNGSFLÜSSIGKEITSCHROMATOGRAFIE, MESSVERFAHREN UND DESSEN ANWENDUNG IN DER ANALYSE DES BIOMARKERS EINER SELTENEN ERKRANKUNG
SYSTÈME POUR LE CHANGEMENT ET LE SCELLEMENT AUTOMATIQUES DES COLONNES CHROMATOGRAPHIQUES JETABLES EN CHROMATOGRAPHIE LIQUIDE À HAUTE PERFORMANCE, PROCÉDÉ DE MESURE ET SON APPLICATION DANS L'ANALYSE DE BIOMARQUEURS DE MALADIES RARES

(43) Date of publication of application: 15.12.2021
(73) Proprietor: MS Ekspert Sp. z o.o., 80-126 Gdansk (PL)
(72) Inventor: MASLOWSKI, Dawid, 83-000 Pruszcz Gdanski (PL); BIENKOWSKI, Tomasz, 01-875 Warszawa (PL); TOMASZEWSKA, Irmina, 80-299 Gdansk (PL); KALICKI, Przemyslaw, 08-300 Sokolów Podlaski (PL); PEREPLYS , Karol, 01-616 Warszawa (PL); LASKOWSKI, Karol, 01-526 Warszawa (PL)
(74) Representative: JD&P Patent Attorneys Joanna Dargiewicz & Partners

(56) References cited:
- WO-A1-2018/173214
- US-A1- 2010 154 207
- SPENCER SANDRA E. ET AL: "Automated Trapping Column Exchanger for High-Throughput Nanoflow Liquid Chromatography", ANALYTICAL CHEMISTRY, vol. 89, no. 4, 30 January 2017 (2017-01-30), pages 2383-2389, XP055837776, US ISSN: 0003-2700, DOI: 10.1021/acs.analchem.6b04227

## Description

### The field of technology

The present invention relates to a system for automatic changing and sealing of disposable chromatographic columns in high-performance liquid chromatography devices (HPLC) coupled with a mass spectrometer, preferably for simplification of a HPLC / MS analysis. The invention includes also a measurement method and its use in the analysis of biomarker for detection of congenital metabolic diseases.

### State of the art

In quantitative analysis with mass spectrometry coupled with liquid chromatography LC / MS a mixture of compounds is first separated in a chromatographic column; then the ions generated in the ionization process are separated on the basis of the m/z (mass-to-charge ratio) by a mass analyzer or by set of analyzers. For the separation process nominal mass analyzers, or high accuracy mass analyzers (allowing m/z measurement with an accuracy of a few ppm (part per million) can be used. Compounds can be recognized by the characteristic mass of the parent ion or by the specific fragmentation reaction. As the mass spectrometer is a selective analyzer, flow injection analysis (FIA) can be used especially when using tandem MS/MS systems. In this variant of the analysis, the chromatographic column is not used at all, the HPLC system is used as the sample feed, and the separation of the analytes is performed only with a mass spectrometer. The use of such a method greatly simplifies the entire analytical system and shortens the analysis time. However, since all the analytes tested together enter the ion source with matrix, there is a risk of huge matrix effect. It is also impossible to separate isomeric compounds as long as they do not have characteristic fragmentation transitions.

In the state of the art, this type of measurements uses MRM (multiple-reaction monitoring) transitions, also called SRM (selected reaction monitoring). Those abbreviation in the LC/MS/MS technique are used to define the scanning mode of the triple quadrupole spectrometer, in which the compound is recognized basing on its specific fragmentation reaction. The first mass analyzer passes the selected parent ion to the collision cell, the fragmentation occurs in the collision cell, and the second mass analyzer passes only the selected fragmentation ion. It is a mode used in quantitative analysis, providing the highest ion transmission efficiency (and therefore sensitivity) and high selectivity.

In the state-of-art automated solutions in liquid chromatography are known. For example in the patent document published in 1994 [JPH06324027A] a device for managing the service life of a chromatographic column using several parameters and automatic column replacement in liquid chromatography is described.

Another Japanese patent document [JPS62225953A] presents the use of automated ion exchange chromatography to analyze radioactive strontium isotopes. In the cited document, the automation process was used to improve the analysis process and eliminate contact of radioactive material with the personnel operating the device.

Italian patent document from 1990 [IT1239813B] discloses an automatic analyzer system for high performance liquid chromatography (HPLC), including the treatment and purification of samples and the determination of the substances contained therein. The invention is characterized by the injection of a plurality of mixtures in succession by means of a six-port injection valve in the system.

The 2010 international PCT application [WO2010114897A1] discloses an invention relating to a method of analyzing biomarkers correlated with glucose metabolism in the body and / or insulin resistance, methods of identifying biomarkers correlating with glucose metabolism, insulin resistance and disorders related to insulin resistance, including acylcarnitine.

Also known in the state of art [US2011150714A1] are modular systems for radiosynthetics that enable multiple sequential processes and a reduced risk of exposure to radiation for users. The device contains an HPLC module, and the obtained radioisotope-labelled compounds are used for positron emission tomography (PET).

Devices for automated organic synthesis of biologically active compounds labelled with fluorine (18F) are also known in the state of art [US2020316230A1]. Such devices are most often equipped with microfluidic systems.

Patent application [US2008128606A1] discloses a method and systems using liquid chromatography coupled with mass spectrometry (LC-MS/MS and 2D-LC-MS/MS) to analyze endogenous biomarkers including steroid hormones such as estrone and estradiol, thyroid hormones, and metabolites such as 25-hydroxyvitamin D2 and 25-hydroxyvitamin D3, in biological samples.

The patent document [US2010129919A1] describes a method of diagnosing or monitoring a psychotic disorder by measuring the content of a biomarker level selected from a clathrin precursor, an inter-α-trypsin inhibitor, IgM, apolipoprotein A2 and α2H5 glycoprotein.

The patent document [US2012118737] describes an invention relating to a method for diagnosing acute renal failure, comprising the step of determining the content of three polypeptide markers in a sample.

The patent application [US2017192029A1] describes automated sample preparation and analysis systems for the detection and quantitation of biomarkers (e.g. metabolites and / or lipids) in biological samples (e.g. blood, serum or plasma) in a clinical setting.

There are numerous reports in the scientific literature on extensive HPLC systems consisting of multiple chromatographic columns, the operation of which requires specialized engineering knowledge, e.g. L. Zhuang, Y. Ding, S. Murad M, W. Xiao, Z. Wang, J. Zhu, Journal of Chromatography A, 2020, Vol. 1629,, 461499, [DOI: https://doi.org/10.1016/j.chroma.2020.461499**].**

In addition, newborn screening has been introduced in many countries for the prevention, early diagnosis of congenital diseases, and the prompt selection of the correct therapy. For example, the Polish screening program for 2019-2022 is described on the website of the Ministry of Health: https://www.gov.pl/web/zdrowie/program-badan-przesiewowych-noworodkow-w-polsce-na-lata-2019-2022

US2010/154207 A1 discloses an automatic column exchange system with a carousel system. SPENCER SANDRA E. ET AL: "Automated Trapping Column Exchanger for High-Throughput Nanoflow Liquid Chromatography",ANALYTICAL CHEMISTRY, vol. 89, no. 4, 30 January 2017 (2017-01-30), pages 2383-2389, and WO 2018/173214 A1 disclose further such systems.

### State of the art problems

One of the biggest challenges in routine LC/MS analysis, and also in the HPLC technique in general, is the need to ensure stable conditions for the proper operation of the chromatography column. Usually, the column is used to perform 1000 or even more injections, it may result in loss of its physico-chemical properties, and is requested by its high price (on average around 500 Euro). In the course of subsequent analyzes, the column may become clogged, and after a longer period of use it loses its efficiency. Due to the possibility of various technical problems, the operation of the LC/MS system requires qualified personnel. This is a major obstacle to the wide and universal availability of LC/MS analytical technique and full automation of analyzers.

### Solution of state of art problems

The inventors of presented solution found that thanks to the use of short, frit free fused silica columns for maintaining the stationary phase, easy to manufacture and cheap, together with a system for their automatic exchange, allows to fully automate the entire system used in the LC / MS technique ensuring fast semi-quantitative or quantitative analyzes continuously without requiring qualified personnel to replace columns. The present invention is intended for use in repetitive and routine LC / MS laboratory assays such as new born screening.

### Summary of the invention

The present invention relates to a system for the automatic exchange of chromatography columns which is made of a frit free fused silica capillary for maintaining the stationary phase inside the column, the quartz capillary being coated with a polymer, preferably polyimide shell, the system comprising:
- a magazine containing at least one column placed in a holder for securing a column with a cylindrical shape or similar to a cylinder having sealing ferules at both ends, the column being placed along the axis of the holder in the thru-hole for the column;
- a socket in which a column is placed in the working position in column holder. The socket is located in the lower part of the magazine, to which the column in the holder is gravitationally fed from the upper part of magazine, during column replacement process. The magazine with the socket is fixed to the base, between actuators, lying in one axis with the column in the working position and actuators. Additionally in the socket at the line of the axis of the actuators and column in working positions, there are openings ensuring access to the column;
- to each actuator from the magazine side, a coupling union is attached in one axis with the column. Union has a coned receiving port with tubing pocket without mounting thread on the side of the socket and coned receiving port with tubing pocket with mounting thread on the opposite side.

Preferably, the system additionally comprises two actuators positioned and operating perpendicular to the axis of the column.

Preferably, the on column axis actuators are integrated with the elements allowing movement along one axis only. Preferably the elements is a guide.

Preferably, the system is additionally connected to a control unit that initiates and controls column replacement.

Preferably, the system uses columns with an inside diameter ranging from 0.1 mm to 4.1 mm, an outer diameter Ø ranging from 0.36 mm to 7.2 mm, and lengths ranging from 10 to 150 mm.

Preferably, the holder for the column is made of one or more pieces, and the outer diameter of the holder ranges from 2.5mm to 30mm and is fitted to the size of the column, magazine and socket.

Preferably, the column holder is additionally placed in a metal tube to increase stiffness.

Preferably, the holder's ferrules fit standard HPLC couplings to chromatography columns, preferably 1/32 inch (0.794 mm) OD.

Preferably, the actuators used are pneumatic, hydraulic or mechanical.

Preferably, coned receiving ports of the union on both side: with and without a threaded will fit 1/32 inch (0.794 mm) to 1/4 inch (6.35 mm) diameter connections with differnet types of thread, for example 6-40 of thread.

The invention also relates to an LC / MS system comprising an HPLC system and a mass spectrometer, which additionally includes the automatic column exchange system as defined above and a control unit.

The invention also relates to a method for performing an analysis for the selective identification of biomarkers in biological samples, using the system described above, comprising the following steps:
a) the chromatographic column with a monolithic polymer packing from the magazine is placed in the sockets of the system, then the actuators are clamped on the column, and the column is sealed;
b) at least one analysis of the biological sample in the solvent solution is performed with a mass spectrometer, the sample, before entering the ionization source, pass through a column on which the individual components of the analyzed sample are separated;
c) the in-axis of the column actuators open, the system becomes unsealed, the lower orthogonal actuator opens and the column falls out of the socket by gravity, the lower orthogonal actuator closes, the upper orthogonal actuator move apart, and the new column falls out of the magazine into the socket.

The invention also relates to the use of an automatic chromatographic column exchange system as defined above for the analysis of biomarkers for the detection of rare diseases biomarkers in the blood samples using a mass spectrometer. The biomarkers include carnitine or its esters, such as acetylcarnitine, propionylcarnitine, butyrylcarnitine, isovalerylcarnitine, methylglutarylcarnitine, octanoylcarnitine, myristoylcarnitine, palmitoylcarnitine, and/or butyl esters of amino acids such as phenylalanine, tyrosine, valine, leucine, methionine, glycine, alanine, citrulline, pyroglutamic acid, proline, arginine, ornithine.

### Preferred embodiment of invention

The invention will now be illustrated in more detail in the preferred embodiments with reference to the accompanying drawing in which:

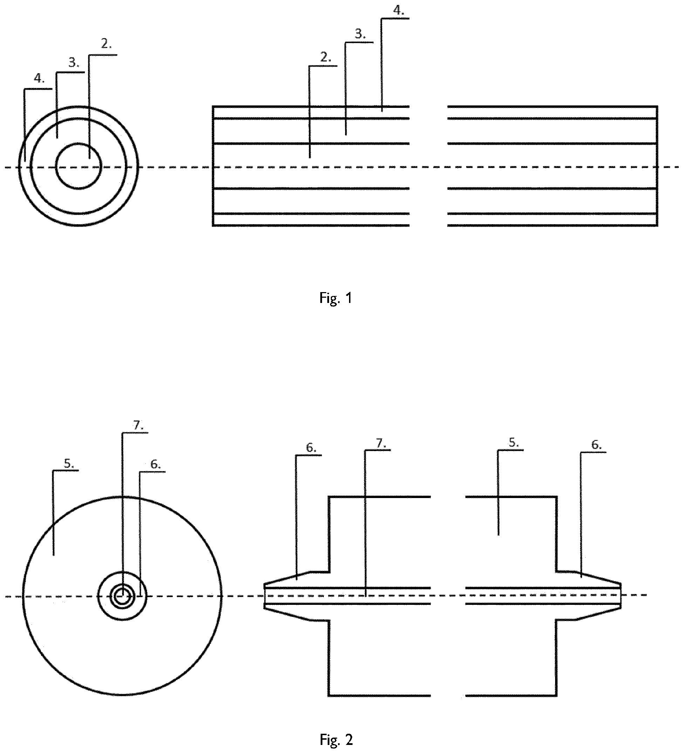

Fig. 1 shows the column (1) in longitudinal and transverse views;
Fig. 2 shows the column holder for fixing the column (5) with sealing ferrules (6) in longitudinal and transverse views;

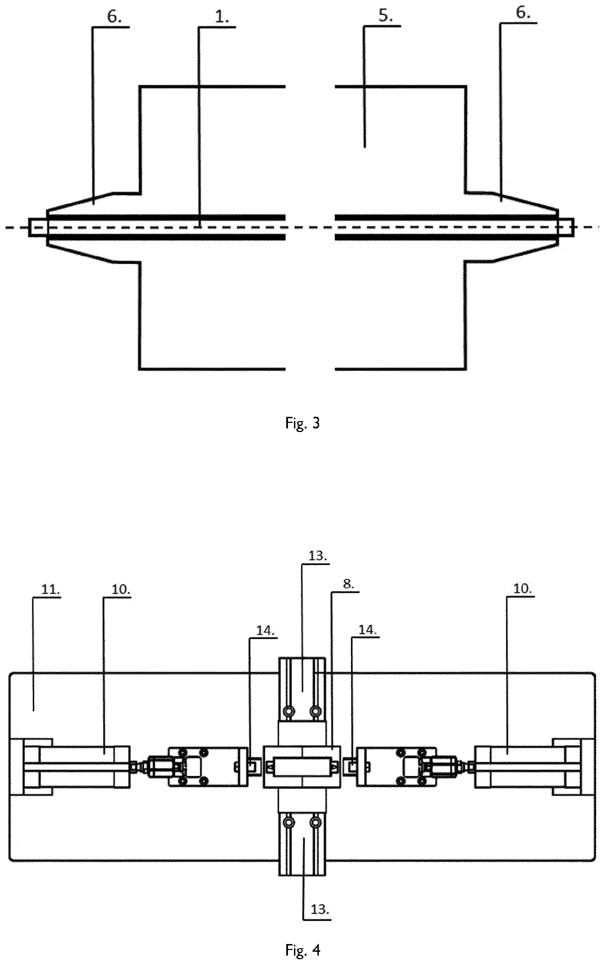

Fig. 3 shows the column holder for fixing the column (5) with the column (1) placed inside the holder (5);
Fig. 4 is a top view of the system for changing and sealing columns;

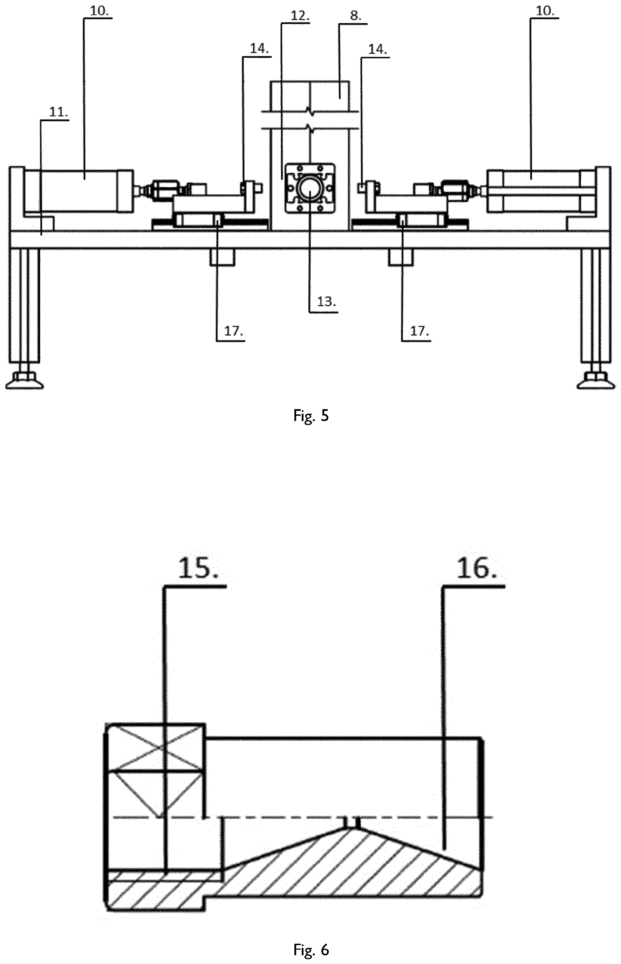

Fig. 5 is a side view of the system for changing and sealing columns;
Fig. 6 shows sealing unions (14);

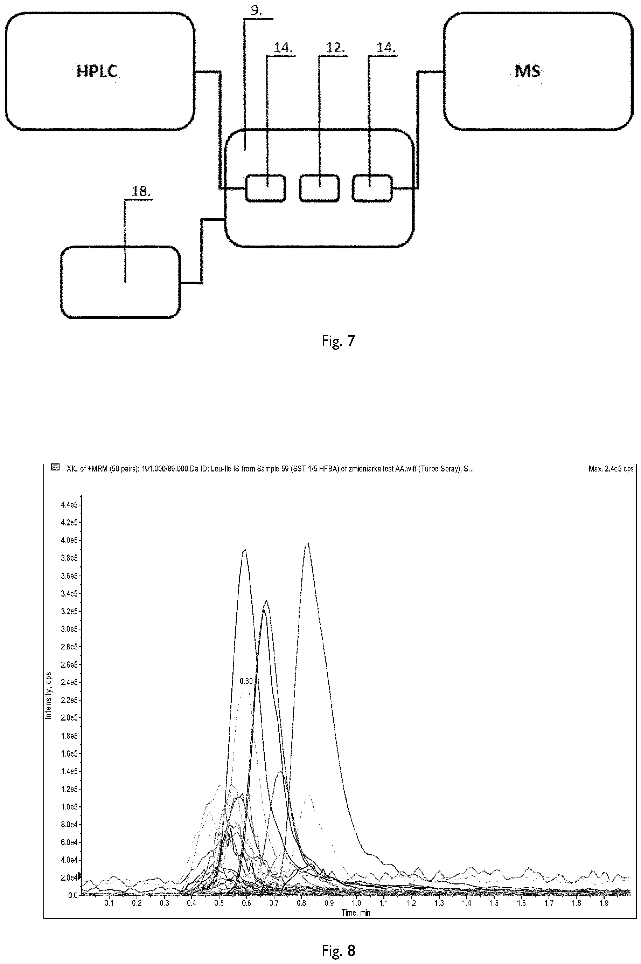

Fig. 7 shows a connection block diagram for an operating system;
Fig. 8 shows an exemplary MRM transition chromatogram made using the described invention for all observed MRM transitions for analysis of a mixture of amino acid esters and acylcarnitines;

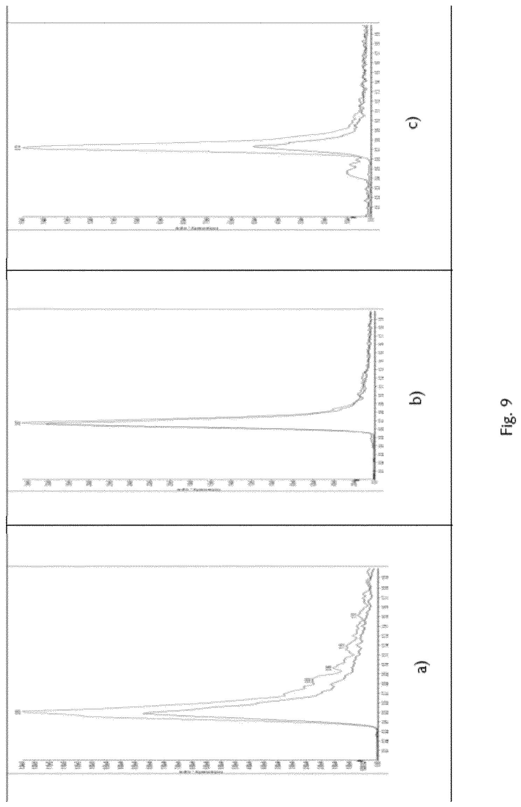

Fig. 9 shows the MRM chromatograms for the selected analytes and their isotopomers, obtained with described invention: (from the left side) glycine, phenylalanine and asparagine.

List of symbols used in the figures of the drawing:
1. The column;
2. Stationary phase;
3. Fused silica capillary;
4. Polyimide coating (or other plastic);
5. The holder, column fixing element;
6. Ferrules responsible for sealing the column;
7. thru-hole for the column;
8. Magazine for columns in the holders
9. System for automatic column changing;
10. Actuators lying in the axis of the column;
11. Base of the system for columns changing;
12. The socket for the holder with column inside. The socket is fixing the column in the holder in working position (support point for the column holders);
13. Actuators acting along an axis orthogonal to the column;
14. Sealing union;
15. Fastening thread (sizes 6-40) with coned receiving port with tubing pocket;
16. coned receiving port with tubing pocket;
17. Guide;
18. Control system (any management system - PC or controller).

### Embodiments of the Invention

The following examples are provided merely to illustrate the invention and the explanation of its various aspects and not to be limiting and should not be equated with all its scope, which is defined in the appended claims. In the following examples, unless otherwise indicated, standard materials and methods as used in the state of art were used, or manufacturers' recommendations for specific devices, materials, and methods were followed.

### Example 1

### Description of the system for automatic column exchange for HPLC

The present invention relates to a system for automatic column exchange in an HPLC chromatograph containing a magazine of disposable columns. The invention relates in particular to the structure of the column, the holder for the column and the method of sealing the column during operation of the system. This solution combines the advantages of the LC / MS method with the preliminary separation of compounds on the column, with the ease of use characteristic of the FIA method.

In this invention, columns (1) are used in which the stationary phase (2) is bonded to the material of which the column (1) is made. The column is made from fused silica, which is covered on the outside with a layer of a polymer such as polyimide (4). The polymer shell provides the column greater flexibility and durability and assure better mounting in the holder (5) and better sealing during operation of the column. The quartz capillary is very thin (with an internal diameter of Ø from 0.1 mm to 3.1 mm), and the polyimide shell adds strength to it and, in the case of the smallest diameters of the quartz capillary, ensures the appropriate thickness. The fused silica capillary can be a commercial product. The stationary phase (2) is a monolithic bed, formed inside the capillary (3), and in the example shown, the column is filled with a polymeric cholesterol phase. Alternatively, column (1) is packed with another monolithic polymeric phase. The polymerization process takes place inside the capillary (3). Alternatively, it is possible to use another polymer packing in which the monolithic phase is bonded to the fused silica wall. It is important that long columns can be made with monolithic phase and cut into shorter pieces afterwards. Since the stationary phase is bonded to the inner surface of the column, frits to maintain the stationary phase within the column need not be used. As a result, the columns can be manufactured to the maximum possible length and then cut into sections of the required length. The inner diameter Ø of the columns is typically 0.1 mm to 3.1 mm, preferably 0.3 mm and the outer diameter 1/32 inch (0.794 mm) to ¼ inch (6.35 mm). HPLC typically uses 1/16 inch (1.588 mm) capillaries, and 1/32 inch (0.794 mm) for smaller flows. Depending on the manufacturer, threaded nuts are used to tighten the coned receiving ports, with the numbers 6-40 being an example of the type of thread. The use of columns (1) with a monolithic polymer packing significantly reduces the cost of column production and enables the production of short columns with a length of 10 mm up to 150 mm.

The produced columns (1) as described above are placed in a cylinder-shaped column holder (5), the holder has sealing ferrules (6) on both end of the column (1). The holder for the column (5) is made of plastic, preferably Teflon or other plastic with suitable/similar sealing parameters. The column holder may be of a different shape to that of a cylinder. The capillary is placed in a holder along the axis of the cylinder, in a thru-hole (7) with a diameter of 0.8 mm, adjusted to the diameter of the column. In an exemplary application, the outer diameter of the holder is 13 mm and is matched to the diameter of the magazine, while the shape and dimensions of the ferrules are adjusted to the standard used in the union (14) for chromatographic connections. The column holder (5) is preferably made of plastic or metal. The length of the column holder is adjusted to the length of the column. The ratio of the length of the holder (5) to the column (1) depends on the type of union (14) used.

In order to increase the stiffness of the column holder, it can be placed in a matching rigid tube made of metal (steel, aluminum, copper or their mixtures and alloys) or of a rigid plastic such as polypropylene, PET, ebonite, PVC, polycarbonates, polyacrylates , polyamides).

The holders (5) prepared in the described way with the columns (1) are placed in a dedicated magazine (8) for automatic feeding. The magazine (8) containing the columns (1) is integrated with the system (9) for automatic changing and sealing of the columns (1). The system (9) consists of two actuators (10) attached to the base (11) lying along one axis with column (1) and the magazine (8) with the holders (5), placed between the actuators (10). Between the actuators (10) on their axis there is a socket (12), in which the column (1) in the holder (5) is placed in the working position. The socket (12) holds the holder for the column (5) with the column (1) in the working position and serves as a support point for the holder (5) when the actuators (10) clamp on the column (1) in the holder (5). In the magazine housing (8), at the height of the socket in the axis of the actuators (10), there are openings that provide access to the column (1). In the working position, the actuators (10) with the column are positioned along one axis. They are responsible for sealing the entire chromatographic system without the use of threaded nuts, such a solution can withstand a pressure of up to 300 bars. The system is equipped with additional actuators (13) lying in the axis orthogonal to the axis of the column. The actuators (13) keep the column in the correct position and are used in the process of column replacement. The actuators (13) can be equipped with additional fastening elements that support the exchange of columns (1) located in the holders (5) and support them in the working position in the socket (12). The socket (12) with the magazine (8) is a replaceable element and its length is adjusted to the length of the columns used.

The socket (12) is the place where the column (1) in the holder (5) falls down, in this position the actuators (10) press the unions to the holder's ferrules and thus the system (9) is sealed.

Attached to each of the actuators (10) is a sealing union (14) which can be placed in the fixing part. On one side (opposite to the socket (12)) of the union there is a coned receiving port with a fastening thread (15) allowing the use of couplings in available standards for connections from 1/32 to 1/4 inch (0.794 to 6.35 mm) By this end of the union, the device is connected to the sample feed system on one side and to an MS ion source on the other side of the system. On the opposite side of the union there is only a coned receiving port without a thread (16).

The union (14) is a modified commercial product used in chromatography. As a standard, only threaded union are used. The solution according to the invention uses a 1/32 inch commercial union (14) in which a threaded port was cut on one side and only the coned receiving port with tubing pocket was left. On the other side of the union (14), the receiving port with thread is used. The side with thread is used to connect the system (9) with the rest of the HPLC system. https://www.vici-jour.com/fittings/ss-unions-red.php

The sealing ferrule is an important issue. It must be fitted to the coned receiving port of the union (14). In order to seal the system, the receiving ports of the unions are pressed by the actuators (10), to the ferrules of the holder (5). This is the solution used in most chromatographic connection, but no actuators are used, only threaded nuts, usually with thru-hole of 1/32 or 1/16 inch (0.794 to 1.588 mm) standard. By tightening the nut onto the ferrule, the process described above follows. The ferrules seals the connection of the joined parts and additionally holds the column (1) in place.

The actuators (10) are integrated with the guide (17), which allows them to slide only along one axis.

### Example 2

### Description of the process of replacing the column (1) placed in the holder (5) during normal system operation.

System operation begins with moving the actuators (10) apart. When they are pulled apart, the column (1) in the holder (5) falls out of the upper part of magazine (8), to the socket (12). Moreover, the column (1) in the holder (5) can be held in the correct position by additional side actuators (13).

As soon as the column (1) in the holder (5) is in the socket (12), the actuators (10) press the unions (14) against the sealing ferrules (6) of the holder (5) on both sides of the column (1). In this way, the chromatographic system is sealed. The connection according to the invention made in this way withstands an operating pressure up to 300 bar. After one analysis (or alternatively multiple analyzes), the column (1) in the holder (5) is replaced with another column (1) from the magazine (8). The column (1) is removed by moving the on-axis (10) and bottom side (13) actuator apart, then the used column (1) in the holder (5) falls by gravity from the socket (12), in next step the bottom side actuator (13) close and upper side actuator (13) move apart. This allows another new column (1) to fall by gravity in to the socket (12). The side actuators (13) support the holders falling from above with additional fastening elements.

The replacement of the column (1) takes place, depending on the application and the method of sample preparation, after a few or over a dozen analyzes (injections of the analyzed mixture). In the case of very poorly prepared samples, the column can be replaced after just one analysis. However, in the case of well-cleaned samples, the column can be changed over a dozen or several dozen analyzes.

In the case of the described application, also depending on the spectrometer used and the method of sample preparation, 5 to 20 injections per one column (1) can be made.

The whole system is controlled by an electronic unit (18), which allows the columns to be changed at a specified time or based on an external signal, for example in the case of detecting the lack of separation of signals characteristic for the biomarkers under study. It is any electronic controller, currently it is not even a PC, but a simpler controller that sends sequence of signals to actuators.

### Example 3

### Sample analysis of a mixture of amino acid n-butyl esters and acetylcarnitines - newborn screening

One of the most frequently performed routine measurements on the LC/MS system in medical diagnostics is newborn screening. This measurement is performed using flow injection analysis (FIA). During the measurement several dozen MRM transitions are monitored for selected amino acids and acylcarnitines, as well as their isotope standards. Since this analysis does not routinely use a chromatography column, all analytes and sample matrix enter simultaneously the ion source. First, it causes a significant signal suppression by reducing the ionization efficiency of the tested analytes. Additionally, the measurement is disturbed by isobaric interferences. It is related to the nature of MRM transitions. This method identifies the analyte on the basis of the characteristic fragmentation reaction. There is a risk that a compound would be present in the sample that will have similar masses of the parent and fragmentary ion. The signal from the interfering compound, and not from the analyte being observed, may appear in the chromatogram. So it is an interference of similar mass, i.e. isobaric. This would result in false positive signal. In this method, the area under the recorded signal for the selected MRM transition is not used for the quantification of the analyte, but the mean value of the signal intensity. The result obtained is semi-quantitative. This is a very quick type of analysis. Typically, the time between injections is around 60 seconds. The measurement of the signal intensity itself usually takes several seconds. The remaining time is the autosampler cycle.

The use of the described invention allows the sample delivery to the ion source and ionization to be stretched in time and in many cases to separate isobaric interference from the signal of the analytes tested. The analysis time is extended to approximately 90-120 seconds (including autosampler operating time), most of which is used for sample measurement. The time is therefore increased from about one minute to two minutes, but in this way it is possible to quantify by the integration of area of the peaks and also the matrix effect is reduced. Overall, it is possible to perform a quantitative measurement of much greater diagnostic importance. In the case of the attached sample chromatograms, in which MRM transition are observed for the amino acid and its isotopes, it can be seen that in the case of asparagine, an isobaric interferent is separated.

Exemplary measurements were carried out using microLC systems (Ekspert LC200) with binary pumps with mixing on the high pressure side and API 4000 spectrometer. For measurements, water with 0.1% HFBA (Heptafluorobutyric acid) was used as solvent A, acetonitrile/water 95/5 with 0.1% HCOOH was used as solvent B. The A/B phase ratio was 8/2.

A column packed with monolithic cholesterol phase, 2 cm long and 0.3 mm in diameter, was used.

Measurements were made on real extracts from dry blood drop samples, for the measurement purposes, the solutions used in the FIA method were diluted fivefold using phase A. For the analyze, an injection of 1 µl (1 microlitre) of the sample was used.

In this embodiment of the invention, the following biomarkers are analyzed: butyl esters of amino acids such as phenylalanine, tyrosine, valine, leucine, methionine, glycine, alanine, citrulline, pyroglutamic acid, proline, arginine, ornithine, glutamic acid, aspartic acid, and also carnitine and its esters such as acetyl carnitine, propionyl carnitine, butyryl carnitine, isovaleryl carnitine, methylglutaryl carnitine, octanoyl carnitine, myristoyl carnitine, palmitoyl carnitine.

## Claims

1. System for automatic exchange of chromatographic columns (1) which are made of a fritless fused silica capillary for keeping a stationary phase (2) inside the column (1), wherein the fused silica capillary is coated with a polymeric shell (4), preferably polyimide, the system includes:
- a magazine (8), wherein a holder (5) for at least one column (1) is placed, the holder (5) comprising sealing ferrules (6) integrated at both ends of the holder (5), the sealing ferrules configured to surround said column having a cylindrical shape or a shape similar to a cylinder, the holder (5) comprising a through-hole (7) for the column (1), the column (1) being placeable along an axis of the holder (5) in the through-hole (7) for the column (1);
- a socket (12) wherein the column holder (5) with the column (1) is seated in a working position, wherein the socket (12) is located in lower part of the magazine (8), the socket (12) configured to receive from the upper part of the magazine (8) the column (1) in the holder (5), wherein the column (1) in the holder (5) is fed by gravity into the socket (12) during column exchange,
wherein the magazine (8) with the socket (12) is mounted on a base (11) between actuators (10) attached to the base (11), the actuators (10) lying in one axis with the column (1) in the working position,
the system further comprising a housing of the magazine (8), the housing comprising, at the height of the socket (12) in the axis of the actuators (10), openings that provide access to the column (1);
- to each actuator (10) from the side of the magazine (8) a sealing union (14) is attached, lying in one axis with the column (1), which has a sealing coned receiving ports with tubing pocket (16) on the side of the column (1) and receiving ports with tubing pocket with mounting thread (15) on the opposite side.

2. The system according to claim 1, which additionally includes two actuators (13) positioned and operating orthogonally to the axis of the column (1).

3. The system according to claim 1 or 2, wherein the actuators (10) are integrated with elements (17) allowing movement only along one axis

4. The system according to claim 3, wherein the element (17) is a guide.

5. System according to any of the claims 1-4, additionally comprising a control unit (18) that controls exchange of the column.

6. System according to any of the claims 1-5, wherein the columns (1) have an internal diameter ranging from 0.1 mm to 4.1 mm, an external diameter Ø ranging from 0.36 mm to 7.2 mm, and a length ranging from 10 to 150 mm.

7. System according to any of the claims 1-6, wherein the holder (5) for the column (1) is made of one or more elements, and the external diameter of the holder (5) ranges from 2.5 mm to 30 mm, which is adapted to the size of the column (1), the magazine (8) and the socket (12).

8. System according to any of the claims 1-7, wherein the mounting holder (5) for the column (1) is additionally placed in a stiffening metal tube to increase the stiffness.

9. The system according to any of claims 1 to 8 above, wherein the ferrules (6) of the holder (5) conform to standard HPLC couplings with chromatographic columns, preferably 1/32 inch (0.794 mm) OD.

10. The system according to any of claims 1 to 9 above, wherein the actuators (10) and / or (13) are pneumatic, hydraulic or mechanical.

11. The system according to any one of claims 1 to 10 above, wherein the sealing unions (14) with coned receiving ports with tubing pocket (15) on the column side, and coned receiving ports with tubing pocket with fastening threaded on the opposite side, fit 1/32 inch (0.794 mm) to 1/4 inch (6.35 mm) diameter connections with a thread size 6-40.

12. LC/MS system comprising an HPLC system coupled with a mass spectrometer further comprising an automatic column exchange system as defined in any one of claims 1 to 11 and the control system (18).

13. A method of carrying out an analysis for the selective identification of biomarkers in biological samples, using the system according to claim 12, including the following steps:
a) the chromatographic column (1) with a monolithic polymer packing from the magazine (8) is placed in the socket (12) of the system (9), then the actuators (10) placed in the axis of the column (1) are clamped on the column (1), and the column (1) is sealed in the system;
b) at least one analysis of the biological sample in the solvent solution is performed with the mass spectrometer, the sample, before entering the ionization source passes through the column (1) in which the individual components of the analyzed sample are separated;
c) the actuators (10) are opened unsealing the system and the column (1) falls out of the socket (12), the actuators (13) move apart in sequence, and a the new column (1) falls out of the magazine (8) into the socket (12) .

14. Use of the automatic chromatographic column exchange system as defined in claim 12 for analyzing disease biomarkers from blood or other body fluids using the mass spectrometer.

15. Use according to claim 14 wherein the biomarker is detected from blood and is selected from carnitine or its butyl esters, such as acetylcarnitine, propionyl carnitine, butyrylcarnitine, isovaleryl carnitine, methylglutarylcarnitine, octanoyl carnitine, myristoylcarnitine, and / or butyl esters of amino acids such as phenylalanine, tyrosine, valine, leucine, methionine, glycine, alanine, citrulline, pyroglutamic acid, proline, arginine, ornithine, glutamic acid, aspartic acid.

## Patentansprüche

1. System zum automatischen Austausch von Chromatographiesäulen (1), die aus einer Fritless-Quarzglaskapillare bestehen, um eine stationäre Phase (2) innerhalb der Säule (1) zu halten, wobei die Quarzglaskapillare mit einer polymeren Hülle (4), vorzugsweise Polyimid, beschichtet ist, wobei das System Folgendes umfasst:
- ein Magazin (8), in dem ein Halter (5) für wenigstens eine Säule (1) platziert ist, wobei der Halter (5) Dichtungshülsen (6) umfasst, die an beiden Enden des Halters (5) integriert sind, wobei die Dichtungshülsen so konfiguriert sind, dass sie die Säule, die eine Zylinderform oder eine zylinderähnliche Form aufweist, umgeben, wobei der Halter (5) ein durchgehendes Loch (7) für die Säule (1) umfasst, wobei die Säule (1) entlang einer Achse des Halters (5) in dem durchgehenden Loch (7) für die Säule (1) platziert werden kann;
- eine Fassung (12), in die der Säulenhalter (5) mit der Säule (1) in einer Arbeitsposition eingesteckt ist, wobei sich die Fassung (12) in einem unteren Teil des Magazins (8) befindet, wobei die Fassung (12) so konfiguriert ist, dass sie von dem oberen Teil des Magazins (8) aus die Säule (1) in dem Halter (5) aufnehmen kann, wobei die Säule (1) in dem Halter (5) während des Säulenaustauschs unter der Schwerkraft in die Fassung (12) rutscht, wobei das Magazin (8) mit der Fassung (12) auf einer Basis (11) zwischen an der Basis (11) befestigten Stellantrieben (10) montiert ist, wobei die Stellantriebe (10) in der Arbeitsposition in einer Achse mit der Säule (1) liegen, wobei das System weiterhin ein Gehäuse des Magazins (8) umfasst, wobei das Gehäuse auf der Höhe der Fassung (12) in der Achse der Stellantriebe (10) Öffnungen umfasst, die Zugang zu der Säule (1) gewähren;
- von der Seite des Magazins (8) her eine Dichtungsverbindung (14) zu jedem Stellantrieb (10) befestigt ist, die in einer Achse mit der Säule (1) liegt und auf der Seite der Säule (1) abdichtende konische Aufnahmeanschlüsse mit einer Röhrentasche (16) und auf der entgegengesetzten Seite Aufnahmeanschlüsse mit einer Röhrentasche mit einem Montagegewinde (15) aufweist,

2. System gemäß Anspruch 1, das zusätzlich zwei Stellantriebe (13) umfasst, die senkrecht zur Achse der Säule (1) angeordnet sind und arbeiten.

3. System gemäß Anspruch 1 oder 2, wobei die Stellantriebe (10) einstückig mit Elementen (17) ausgebildet sind, die eine Bewegung nur entlang einer einzigen Achse zulassen.

4. System gemäß Anspruch 3, wobei das Element (17) eine Führung ist.

5. System gemäß einem der Ansprüche 1-4, zusätzlich umfassend eine Steuerungseinheit (18), die den Austausch der Säule steuert.

6. System gemäß einem der Ansprüche 1-5, wobei die Säulen (1) einen Innendurchmesser im Bereich von 0,1 mm bis 4,1 mm, einen Außendurchmesser Ø im Bereich von 0,36 mm bis 7,2 mm und eine Länge im Bereich von 10 bis 150 mm aufweisen.

7. System gemäß einem der Ansprüche 1-6, wobei der Halter (5) für die Säule (1) aus einem oder mehreren Elementen besteht und der Außendurchmesser des Halters (5) im Bereich von 2,5 mm bis 30 mm liegt und an die Größe der Säule (1), des Magazins (8) und der Fassung (12) angepasst ist,

8. System gemäß einem der Ansprüche 1-7, wobei der Montagehalter (5) für die Säule (1) zusätzlich in einem versteifenden Metallrohr platziert ist, um die Steifigkeit zu erhöhen.

9. System gemäß einem der obigen Ansprüche 1 bis 8, wobei die Hülsen (6) des Halters (5) Standard-HPLC-Kopplungen mit Chromatographiesäulen entsprechen, vorzugsweise mit einem Außendurchmesser von 1/32 Zoll (0,794 mm).

10. System gemäß einem der obigen Ansprüche 1 bis 9, wobei die Stellantriebe (10) und/oder (13) pneumatisch, hydraulisch oder mechanisch sind.

11. System gemäß einem der obigen Ansprüche 1 bis 10, wobei die Dichtungsverbindungen (14) mit konischen Aufnahmeanschlüssen mit einer Röhrentasche (15) auf der Säulenseite und konischen Aufnahmeanschlüssen mit einer Röhrentasche mit einem Montagegewinde auf der entgegengesetzten Seite zu Verbindungsstücken mit einer Gewindegröße von 6-40 und einem Durchmesser von 1/32 Zoll (0,794 mm) bis 1/4 Zoll (6,35 mm) passen.

12. LC/MS-System, das ein HPLC-System umfasst, welches an ein Massenspektrometer gekoppelt ist, weiterhin umfassend ein automatisches Säulenaustauschsystem, wie es in einem der Ansprüche 1 bis 11 definiert ist, und das Steuerungssystem (18).

13. Verfahren zum Durchführen einer Analyse zur selektiven Identifizierung von Biomarkern in biologischen Proben unter Verwendung des Systems gemäß Anspruch 12, umfassend die folgenden Schritte:
a) die Chromatographiesäule (1) mit einer monolithischen Polymerfüllung aus dem Magazin (8) wird in der Fassung (12) des Systems (9) platziert, dann werden die in der Achse der Säule (1) platzierten Stellantriebe (10) an die Säule (1) geklemmt, und die Säule (1) wird in dem System versiegelt;
b) wenigstens eine Analyse der biologischen Probe in der Lösungsmittellösung wird mit dem Massenspektrometer durchgeführt, die Probe, bevor sie in die Ionisierungsquelle eintritt, durchläuft die Säule (1), in der die einzelnen Komponenten der analysierten Probe getrennt werden;
c) die Stellantriebe (10) werden geöffnet und entsiegeln das System, und die Säule (1) fällt aus der Fassung (12), die Stellantriebe (13) bewegen sich nacheinander auseinander, und eine neue Säule (1) fällt aus dem Magazin (8) in die Fassung (12).

14. Verwendung des automatischen Chromatographiesäulenaustauschsystems, wie es in Anspruch 12 definiert ist, zum Analysieren von Krankheitsbiomarkern aus Blut oder anderen Körperflüssigkeiten unter Verwendung des Massenspektrometers.

15. Verwendung gemäß Anspruch 14, wobei der Biomarker aus Blut nachgewiesen wird und aus Carnitin oder seinen Butylesters, wie Acetylcarnitin, Propionylcarnitin, Butyrylcarnitin, Isovalerylcarnitin, Methylglutarylcarnitin, Octanoylcarnitin, Myristoylcarnitin, und/oder Butylestern von Aminosäuren, wie Phenylalanin, Tyrosin, Valin, Leucin, Methionin, Glycin, Alanin, Citrullin, Pyroglutaminsäure, Prolin, Arginin, Ornithin, Glutaminsäure, Asparaginsäure, ausgewählt ist.

## Revendications

1. Système de changement automatique de colonnes chromatographiques (1) qui sont faites d'un tube capillaire de silice fondue sans fritté pour conserver une phase stationnaire (2) à l'intérieur de la colonne (1), dans lequel le tube capillaire de silice fondue est revêtu d'une enveloppe polymère (4), de préférence en polyimide, le système comprenant :
- un magasin (8), dans lequel est placé un support (5) pour au moins une colonne (1), le support (5) comprenant des férules d'étanchéité (6) intégrées au niveau des deux extrémités du support (5), les férules d'étanchéité étant conçues pour entourer ladite colonne ayant une forme cylindrique ou une forme similaire à un cylindre, le support (5) comprenant un trou traversant (7) pour la colonne (1), la colonne (1) pouvant être placée le long d'un axe du support (5) dans le trou traversant (7) pour la colonne (1) ;
- une douille (12) dans laquelle est mis en place le support de colonne (5) avec la colonne (1) dans une position de travail, la douille (12) étant située dans la partie inférieure du magasin (8), la douille (12) étant conçue pour recevoir, depuis la partie supérieure du magasin (8), la colonne (1) dans le support (5), la colonne (1) dans le support (5) étant chargée par gravité dans la douille (12) pendant le changement de colonne,
dans lequel le magasin (8) avec la douille (12) est monté sur une base (11) entre des actionneurs (10) fixés à la base (11), les actionneurs (10) reposant dans un axe avec la colonne (1) dans la position de travail,
le système comprenant en outre un logement du magasin (8), le logement comprenant, au niveau de la hauteur de la douille (12) dans l'axe des actionneurs (10), des ouvertures qui fournissent un accès à la colonne (1) ;
- à chaque actionneur (10) depuis le côté du magasin (8) est fixé un raccord union d'étanchéité (14), reposant dans un axe avec la colonne (1), lequel a des orifices de réception coniques d'étanchéité avec une poche de tuyau (16) du côté de la colonne (1) et des orifices de réception avec une poche de tuyau pourvus d'un filetage de raccordement (15) du côté opposé.

2. Système selon la revendication 1, qui comprend en outre deux actionneurs (13) positionnés et fonctionnant de manière orthogonale à l'axe de la colonne (1).

3. Système selon la revendication 1 ou 2, dans lequel les actionneurs (10) sont intégrés avec des éléments (17) permettant le mouvement seulement le long d'un axe.

4. Système selon la revendication 3, dans lequel l'élément (17) est un guide.

5. Système selon l'une quelconque des revendications 1 à 4, comprenant en outre une unité de commande (18) qui commande le changement de la colonne.

6. Système selon l'une quelconque des revendications 1 à 5, dans lequel les colonnes (1) ont un diamètre interne allant de 0,1 mm à 4,1 mm, un diamètre externe Ø allant de 0,36 mm à 7,2 mm, et une longueur allant de 10 à 150 mm.

7. Système selon l'une quelconque des revendications 1 à 6, dans lequel le support (5) pour la colonne (1) est fait d'un ou de plusieurs éléments, et le diamètre externe du support (5) va de 2,5 mm à 30 mm, lequel est adapté à la taille de la colonne (1), du magasin (8) et de la douille (12).

8. Système selon l'une quelconque des revendications 1 à 7, dans lequel le support de montage (5) pour la colonne (1) est placé en outre dans un tube en métal rigidifiant pour augmenter la rigidité.

9. Système selon l'une quelconque des revendications 1 à 8 ci-dessus, dans lequel les férules (6) du support (5) s'adaptent à des raccords HPLC standards avec des colonnes chromatographiques, de préférence de diamètre externe de 1/32 pouce (0,794 mm).

10. Système selon l'une quelconque des revendications 1 à 9 ci-dessus, dans lequel les actionneurs (10) et/ou (13) sont pneumatiques, hydrauliques ou mécaniques.

11. Système selon l'une quelconque des revendications 1 à 10 ci-dessus, dans lequel les raccords union d'étanchéité (14) avec des orifices de réception coniques pourvus de poches de tuyau (15) sur le côté de la colonne, et des orifices de réception coniques munis de poches de tuyau avec fixation filetée sur le côté opposé, s'emmanchent à des raccords de diamètre de 1/32 pouce (0,794 mm) à 1/4 pouce (6,35 mm) avec une taille de filetage 6-40.

12. Système LC/MS comprenant un système HPLC couplé à un spectromètre de masse comprenant en outre un système de changement automatique de colonne tel que défini selon l'une quelconque des revendications 1 à 11 et le système de commande (18).

13. Méthode de réalisation d'une analyse pour l'identification sélective de biomarqueurs dans des échantillons biologiques, en utilisant le système selon la revendication 12, comprenant les étapes suivantes :
a) la colonne chromatographique (1) avec un garnissage polymère monolithique provenant du magasin (8) est placée dans la douille (12) du système (9), puis les actionneurs (10) placés dans l'axe de la colonne (1) sont serrés sur la colonne (1), et la colonne (1) est rendue étanche dans le système ;
b) au moins une analyse de l'échantillon biologique dans la solution de solvant est réalisée avec le spectromètre de masse, l'échantillon, avant d'entrer dans la source d'ionisation, passe à travers la colonne (1) dans laquelle les composants individuels de l'échantillon analysé sont séparés ;
c) les actionneurs (10) sont ouverts, rompant l'étanchéité du système et la colonne (1) sort de la douille (12), les actionneurs (13) se séparent séquentiellement, et une nouvelle colonne (1) sort du magasin (8) pour entrer dans la douille (12).

14. Utilisation du système de changement automatique de colonne chromatographique tel que défini dans la revendication 12, pour l'analyse de biomarqueurs pathologiques à partir du sang ou d'autres fluides corporels en utilisant le spectromètre de masse.

15. Utilisation selon la revendication 14, dans laquelle le biomarqueur est détecté à partir du sang et est choisi parmi la carnitine ou ses esters de butyle, tels que l'acétylcarnitine, la propionylcarnitine, la butyrylcarnitine, l'isovalérylcarnitine, la méthylglutarylcarnitine, l'octanoylcarnitine, la myristoylcarnitine, et/ou des esters de butyle d'acides aminés tels que la phénylalanine, la tyrosine, la valine, la leucine, la méthionine, la glycine, l'alanine, la citrulline, l'acide pyroglutamique, la proline, l'arginine, l'ornithine, l'acide glutamique, l'acide aspartique.
